# FASCICULE DE BREVET EUROPEEN

(11) **EP 2 462 076 B1**
(45) Date de publication et mention de la délivrance du brevet: **21.10.2015**
(21) Numéro de dépôt: 10752036.3
(22) Date de dépôt: 19.07.2010
(51) Int. Cl.: C04B 28/18, C04B 38/06, F17C 11/00, B01J 20/10

(54) **MATIÈRE POREUSE CÉRAMIQUE PRÉSENTANT UNE ARCHITECTURE DE TYPE ALVÉOLAIRE ET UNE MACROPOROSITÉ CONTRÔLÉE**
PORÖSES KERAMIKMATERIAL MIT ZELLULÄRER STRUKTUR UND GESTEUERTER MAKROPOROSITÄT
POROUS CERAMIC MATERIAL HAVING A CELLULAR STRUCTURE AND A CONTROLLED MACROPOROSITY

(30) Priorité: 05.08.2009 FR 0955509
(43) Date de publication de la demande: 13.06.2012
(73) Titulaire: L'Air Liquide Société Anonyme pour l'Etude et l'Exploitation des Procédés Georges Claude, 75007 Paris (FR)
(72) Inventeur: BERTAIL, Caroline, F-91190 Villiers-le-Bâcle (FR); DEL-GALLO, Pascal, F-91410 Dourdan (FR); CANTONNET, Jérôme, F-19100 Brives (FR)
(74) Mandataire: Conan, Philippe Claude
(86) Numéro de dépôt international: PCT/FR2010/051505
(87) Numéro de publication internationale: WO 2011/015750

(56) Documents cités:
- EP-A1- 1 886 982
- EP-A1- 1 887 275
- DE-A1- 1 471 296
- US-A1- 2005 113 934
- CHEMICAL ABSTRACTS, vol. 110, no. 12, 12 juin 1989 (1989-06-12), Columbus, Ohio, US; abstract no.: 217944k, M.Fudjii et al.: "Manufacture of porous ceramics", page 331, XP00059282 & JP 63 282179 A (NIPPON STEEL CORP; KUROSAKI REFRACTORIES CO) 18 novembre 1988 (1988-11-18)
- CHEMICAL ABSTRACTS, vol. 103, no. 2, 15 juillet 1985 (1985-07-15), Columbus, Ohio, US; abstract no.: 10540k, "Lightweight calcium silicate moldings", page 272, XP00188548 & JP 60 021846 A (OSAKA PACKING) 4 février 1985 (1985-02-04)
- LIN K ET AL: "Fabrication and characterization of 45S5 bioglass reinforced macroporous calcium silicate bioceramics", JOURNAL OF THE EUROPEAN CERAMIC SOCIETY NOVEMBER 2009 ELSEVIER LTD GBR, vol. 29, no. 14, novembre 2009 (2009-11), pages 2937-2943, XP002582197, DOI: DOI:10.1016/J.JEURCERAMSOC.2009.04.025

## Description

La présente invention a pour objet une nouvelle matière poreuse céramique, le procédé de fabrication de cette nouvelle matière, les récipients la contenant, ainsi que l'utilisation des récipients pour stocker des fluides tels que des gaz et/ou des liquides.

Il est connu d'utiliser des récipients sous pression contenant des gaz, tels que l'acétylène, dissous dans un solvant, tel que l'acétone ou le DMF, dans différentes applications, et notamment pour réaliser des opérations de soudage, brasage et chauffage en combinaison avec une bouteille d'oxygène.

Ces récipients sont habituellement garnis de matériaux de remplissage solides, destinés à stabiliser les gaz qu'ils contiennent, lesquels sont thermodynamiquement instables sous l'effet de variations de pression et/ou de température et donc susceptibles de se décomposer lors de leur stockage, leur transport et/ou leur distribution.

Ces matériaux doivent avoir une porosité suffisante pour faciliter l'adsorption et la libération des gaz contenus dans le récipient. Ils doivent également être incombustibles, inertes vis-à-vis de ces gaz et présenter une bonne résistance mécanique. Ces matériaux sont classiquement constitués de masses céramiques silicocalciques poreuses, obtenues par exemple à partir d'un mélange homogène dans l'eau de chaux vive ou de lait de chaux et de silice (notamment sous forme de farine de quartz), comme décrit dans les documents WO-A-93/16011, WO-A-98/29682, EP-A-262031, pour former une pâtée qui est ensuite soumise à une synthèse hydrothermale. Précisément, la pâtée est introduite dans le récipient à garnir, sous vide partiel, lequel est ensuite soumis à un autoclavage en pression et en température, puis à une cuisson dans un four pour éliminer complètement l'eau et former une masse solide monolithique de composition CaₓSi_{y}O_{z},w.H₂O présentant des structures cristallines de type tobermorite et xonotlite, avec une présence éventuelle résiduelle de quartz. Divers additifs peuvent être ajoutés à ces mélanges de l'art antérieur pour améliorer la dispersion de la chaux et de la silice et éviter ainsi la formation d'inhomogénéités structurales et les phénomènes de retrait observés lors du durcissement de la masse poreuse. Les matériaux de remplissage obtenus doivent en effet présenter une porosité homogène sans espaces vides dans lesquels des poches de gaz pourraient s'accumuler et entraîner des risques d'explosion.

Le document EP-A-264550 indique en outre qu'une masse poreuse contenant au moins 50%, voire au moins 65%, voire même au moins 75% en poids de phase cristalline (par rapport au poids de silicate de calcium) permet de satisfaire à la double exigence de résistance à la compression et au retrait aux températures de synthèse hydrothermale et de cuisson.

Si les masses poreuses connues sont globalement satisfaisantes sur le plan de leur résistance mécanique, il n'en demeure pas moins que les durées de remplissage, de restitution, de vidange et de filtration restent longues.

En effet, selon les conditions opératoires (température d'utilisation, débit de travail, quantité de gaz contenu dans la bouteille...), elles ne permettent pas toujours de soutirer le gaz qu'elles renferment en continu, à un débit élevé, pendant toute la durée nécessaire à certaines applications, notamment de soudage, avec un taux de restitution de gaz maximal, correspondant au rapport de la quantité de gaz utilisable à la quantité de gaz initialement stockée. Or, il serait souhaitable de pouvoir satisfaire à un débit de 200 l/h en continu pendant 15 mn et à un débit de pointe de 400 l/h pendant 4 mn, pour un taux de contenance en gaz supérieur ou égal à 50% au démarrage de l'essai (défini comme le rapport de la quantité de gaz présente à cet instant à la quantité de gaz initialement chargée dans le récipient), le récipient ayant un rapport diamètre/longueur compris entre 0,2 et 0,7, de préférence entre 0,35 et 0,5, pour une capacité en eau minimale de un litre et de préférence comprise entre 3 et 10 litres.

Cette insuffisance est notamment liée à la perte de charge importante engendrée par la microstructure. Cette microstructure est constituée par une microporosité formée par l'empilement d'aiguilles de silico-calcaire (distribution poreuse du matériau dans ce cas), formées principalement de xonotlite et/ou de tobermorite et /ou d'autres types de phases du type CSH (foshagite, Riversideite...). Il est entendu par CHS le rapport chaux/eau/silice. L'espace vacant entre les aiguilles forme ainsi une porosité ouverte qui peut varier de 60 à 95%. Une telle microstructure est décrite notamment dans les documents EP 1 887 275 et EP 1 886 982. La perte de charge importante est due à la très petite taille des pores (entre 0,1 µm et 1 µm) et à leur distribution volumique très étroite (de type quasiment monomodal). Il est entendu par taille des pores l'empilement moyen engendré par les aiguilles principalement de xonotlite.

Partant de là, un problème qui se pose est de fournir une matière poreuse céramique dans laquelle les pertes de charge sont limitées de manière à augmenter la diffusion des gaz et/ou liquides au sein de la matière poreuse. Ceci permettrait par exemple de restituer plus rapidement le contenu liquide ou gazeux du volume tout en maintenant un coefficient de sécurité satisfaisant.

Une solution de l'invention est une matière poreuse céramique comprenant :
- une microstructure comprenant un matériau de structure cristalline xonotlite et/ou tobermorite cristallisé sous la forme d'aiguilles liées les unes aux autres de façon à ménager entre elles un diamètre de pore D95 supérieur ou égal à 0,4 µm et inférieur à 5 µm et un diamètre moyen de pore D50 supérieur ou égal à 0,4 µm et inférieur à 1,5 µm préférentiellement de 0,4 à 1µm; et
- une macrostructure continue constituée par des canaux interconnectés dans la microstructure.

Par microstructure, on entend la structure microscopique de la matière.

Par macrostructure, on entend l'architecture de la matière. Ici cette architecture en forme de canaux interconnectés permet la formation de chemins préférentiels continus pour la diffusion des fluides au sein de la microstructure. On parle alors de macrostructure continue.

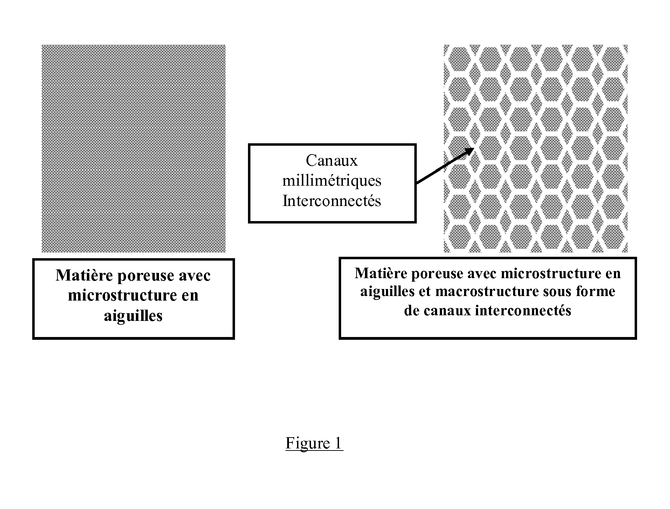

La figure 1 illustre à gauche la microstructure en aiguilles, selon l'art antérieur, d'une masse poreuse céramique pour le stockage de gaz et/ou de liquide et à droite la combinaison microstructure - macrostructure.

Par diamètre de pore D95, on entend un diamètre auquel 95% en volume des pores ont un diamètre inférieur à 5 µm.

Par diamètre moyen de pore D50, on entend un diamètre auquel 50% en volume des pores ont un diamètre inférieur à 1,5 µm.

La xonotlite est un silicate de calcium de formule Ca₆Si₆0₁₇(OH)₂, qui présente des unités répétitives constituées de trois tétraèdres. Par ailleurs, la tobermorite est également un silicate de calcium, de formule Ca₅Si₆(O, OH)₁₈.5H₂O, cristallisé sous forme orthorhombique.

Le mécanisme de formation de la xonotlite le plus généralement accepté à partir des précurseurs CaO et SiO₂ dans le rapport molaire CaO/SiO₂ de 1 environ avec l'eau utilisée comme solvant est le suivant :

CaO / SiO₂ / H₂O → Ca(OH)₂ / SiO₂ / H₂O → Gel C-S-H → tobermorite → xonotlite

L'ensemble des phases intermédiaires représente de préférence de 0 à 10% et plus préférentiellement de 0 à 5% du poids de la phase cristalline présente dans la matière poreuse.

Le carbonate de calcium et la silice représentent chacun de préférence moins de 3% du poids total de ces phases cristallines finales.

Le recours à une matière poreuse sous la forme d'un empilement d'aiguilles enchevêtrées les unes aux autres permet à la structure de présenter les qualités requises pour stabiliser le solvant dans lequel est dissout le gaz et/ou le liquide et limiter sa décomposition en le confinant dans une infinité d'espaces microscopiques, assurant ainsi la sécurité des récipients et leur conformité réglementaire aux tests normatifs, tels que la norme ISO 3807-1.

De préférence les canaux interconnectés (macrostructure) ont un diamètre moyen D50 supérieur à 100 µm et inférieur à 2000 µm.

Selon le cas, la matière poreuse selon l'invention peut présenter une ou plusieurs des caractéristiques suivantes :
- la taille des canaux interconnectés est comprise entre 10 µm à 2 mm de diamètre, préférentiellement entre 100 µm à 1 mm de diamètre ;
- les canaux définissent des nodules ou alvéoles ;
- lesdites aiguilles ont une longueur allant de 2 à 10 µm, de préférence de 2 à 5 µm, une largeur allant de 0,010 à 0,25 µm et une épaisseur inférieur à 0,25 µm ;
- ladite matière renferme au moins 70% en poids de phase cristalline, préférentiellement au moins 90% en poids de phase cristalline.

La matière poreuse a avantageusement une porosité ouverte totale comprise entre 80% et 95%. Ces valeurs (porosité totale, distribution poreuse, ...) peuvent toutes être mesurées par porosimétrie au mercure.

D'autre part la matière poreuse peut également comprendre des fibres choisies parmi les fibres synthétiques à base de carbone, telles que décrites notamment dans le document US-A-3,454,362, les fibres de verre alcalino-résistantes, telles que décrites notamment dans le document EP-A-262031, et leurs mélanges, sans que cette liste ne soit limitative. Ces fibres sont utiles notamment en tant que matériaux de renfort, pour améliorer la résistance aux chocs de la matière poreuse, et permettent également d'éviter les problèmes de fissuration au séchage de la structure. Ces fibres peuvent être utilisées telles quelles ou après traitement de leur surface.

La matière poreuse céramique peut en outre dans son procédé d'élaboration (formulation de la pâte) inclure des agents dispersants ou liants, tels que les dérivés de cellulose, en particulier la carboxyméthylcellulose, l'hydroxypropylcellulose ou l'éthylhydroxyéthylcellulose, des polyéthers, tels que le polyéthylène glycol, des argiles synthétiques de type smectite, de la silice amorphe de surface spécifique avantageusement comprise entre 150 et 300 m²/g, et leur mélanges, sans que cette liste ne soit limitative.

La matière poreuse céramique peut en outre également contenir des composés silico-calcaires initiaux, tel que la wolastonite (CaSiO3) par exemple, servant d'agent(s) nucléant(s) (opération d'ensemencement) permettant une germination plus rapide des cristaux de tobermorite et/ou de xonotlite. La teneur en agent de nucléation varie de 0,1 à 5% massique par rapport à l'ensemble des précurseurs solides.

La matière poreuse céramique peut en outre contenir dans son procédé d'élaboration (formulation de la pâtée) de l'acide phosphorique (<1% du volume total de la pâtée contenant la chaux, la silice et l'eau).

De préférence, la matière poreuse contient des fibres, en particulier des fibres de carbone et/ou de verre et/ou de cellulose. La quantité des fibres est avantageusement inférieure à 55% en poids, par rapport à l'ensemble des précurseurs solides mis en oeuvre dans le procédé de fabrication de la matière poreuse. Elle est de préférence comprise entre 3 et 20% en poids.

La matière poreuse selon l'invention a de préférence une résistance à la compression supérieure ou égale à 15 kg/cm², soit 1,5 MPa, plus préférentiellement supérieure à 25 kg/m², soit 2,5 MPa. La résistance mécanique à la compression peut-être mesurée par prélèvement d'un cube de 100 x 100 mm² dans la matière poreuse et application sur la face supérieure de celui-ci d'une force en pression tandis qu'elle est maintenue contre une plaque métallique horizontale. Cette force correspond à la pression à partir de laquelle la matière commence à se fissurer.

Dans ce contexte, et pour atteindre la matière poreuse spécifique décrite auparavant, la présente invention a pour objet un procédé de fabrication de la matière poreuse céramique selon l'invention, comprenant les étapes suivantes :
a) une étape de préparation d'un mélange pâteux à base d'oxyde de calcium, de silice et d'eau en excès. Ce mélange peut également contenir des fibres de verre, des composés organiques, des agents nucléants et de l'acide phosphorique,
b) une étape d'introduction, dans le mélange préparé à l'étape a), d'une matrice carbonée, monolithique, sous forme d'une structure alvéolaire et pouvant brûler à des températures de l'ordre de 150 - 600°C,
c) une étape de synthèse hydrothermale de la matière poreuse autour de la matrice de l'étape b), à partir du mélange issu de l'étape a) et comprenant la matrice de l'étape b),
d) une étape de séchage de la matière poreuse issue de l'étape c), et
e) une étape d'extraction de la matrice carbonée par combustion à une température inférieure à 600°C. Cette étape peut être incluse dans l'étape de séchage de la matière poreuse céramique sous réserve que la structure carbonée se décompose thermiquement dans les zones de température définies dans le séchage de la matière poreuse.

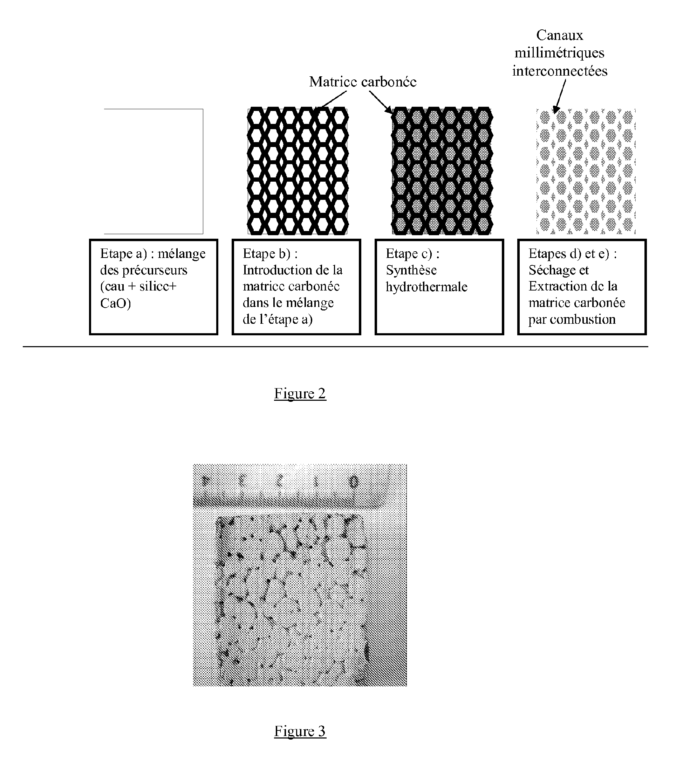

La figure 2 illustre les différentes étapes du procédé de fabrication selon l'invention.

Il est bien entendu que ce procédé peut comprendre d'autres étapes que celles mentionnées ci-dessus, qui peuvent être des étapes préliminaires, intermédiaires ou supplémentaires à celles-ci.

Selon le cas, le procédé de fabrication selon l'invention peut présenter une ou plusieurs des caractéristiques suivantes :
- la masse carbonée est polymérique,
- la matrice carbonée est une architecture alvéolaire à base d'un élément choisi parmi le PVC, le polystyrène, le polyuréthane, le polyéthylène, le polypropylène, la cellulose, le chanvre, l'amidon, le coton.

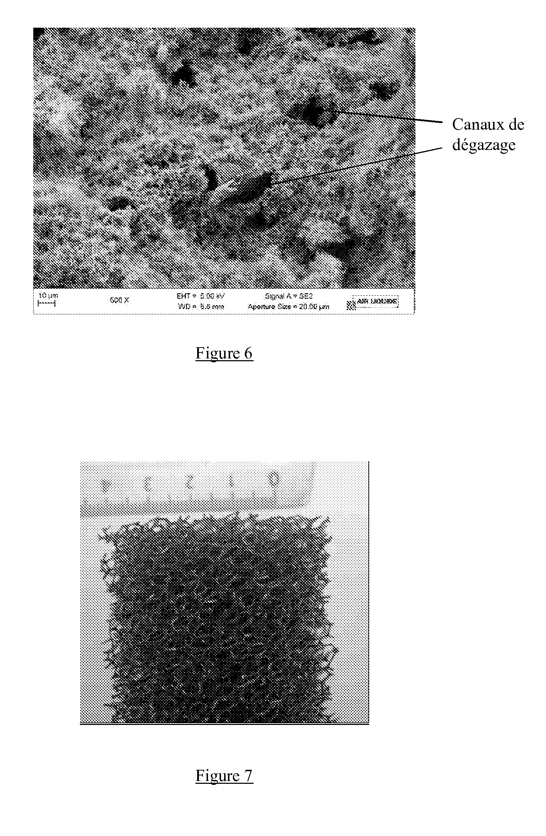

La figure 7 montre le type de mousse pouvant être utilisée comme matrice : dans le cas présent, il s'agit d'une mousse de polyuréthane de porosité 10 ppi (pore per inch).

La deuxième étape (étape b)) consiste à introduire une matrice carbonée, préférentiellement polymérique, dans le mélange de départ comportant les précurseurs silico-calcaires (chaux, silice, eau, nucléant(s) éventuel(s), agent(s) organique(s) (liant, dispersant, ...), acide phosphorique). On entend par matrice carbonée une structure alvéolaire (mousse) à macroporosité fixée (ppi (pore per inch)) et à épaisseur de brins contrôlée. La pâte constituée du mélange de précurseurs va remplir complètement la structure alvéolaire. La structure alvéolaire lors du procédé d'élaboration sera ensuite éliminée par traitement thermique laissant ainsi place à une macrostructure ordonnée correspondant à la forme (ppi, ...) de la structure alvéolaire de départ.

On choisit la matrice carbonée de telle sorte que sa forme géométrique corresponde à la forme des canaux que l'on souhaite avoir au final.

Une fois la matrice carbonée incorporée, on procède à la troisième étape (étape c)) qui consiste à soumettre le mélange chaux-silice de l'étape a) dans lequel on a introduit la matrice carbonée à une synthèse hydrothermale à une température comprise entre 170°C et 300°C environ, préférentiellement entre 180 et 220°C, pendant une durée allant, selon le volume du récipient à garnir, de 10h à 70h, par exemple voisine de 40h pour un récipient de volume en eau égal à 6 litres.

La quatrième étape du procédé (étape d)) ou étape de séchage a pour fonction non seulement d'évacuer l'eau résiduelle, mais aussi de conférer à la masse traitée une structure majoritairement cristalline et éventuellement de terminer si nécessaire la transformation hydrothermale à pression atmosphérique. Cette opération est réalisée dans un four traditionnel électrique ou à gaz (le même ou non que celui utilisé pour l'opération de synthèse hydrothermale), à la pression atmosphérique.

La cinquième étape du procédé (étape e)) consiste à extraire la matrice carbonée par combustion. L'extraction conduit à la formation de canaux millimétriques pour la diffusion des fluides au sein de la microstructure. Pour cela, on applique une température sur la matrice poreuse qui permet de brûler la matrice carbonée. Cette température doit rester inférieure à 600°C pour ne pas détruire la microstructure initiale. Dans le cas de la mousse de polyuréthane citée en exemple, une température de 350°C suffit à la décomposer. Cette étape peut être couplée avec l'étape de séchage. Une fois cette matrice évacuée, on obtient la matière poreuse selon l'invention, formée d'une double porosité (micro (= porosité d'empilements des aiguilles de xonotlite) et milli pores (les millipores correspondant au négatif de la structure carbonée)).

La figure 3 est une photographie de la coupe d'un bloc de matière poreuse selon l'invention. On peut voir sur cette photographie la macrostructure des canaux millimétriques. Ces canaux définissent des nodules ou alvéoles de matière poreuse de forme à peu près sphérique. Ils représentent le négatif de la mousse de polyuréthane initiale caractérisée par une épaisseur de brins, une structure d'alvéoles et un nombre d'alvéoles (pores) par unité de surface ou de longueur (ppi : pore per inch).

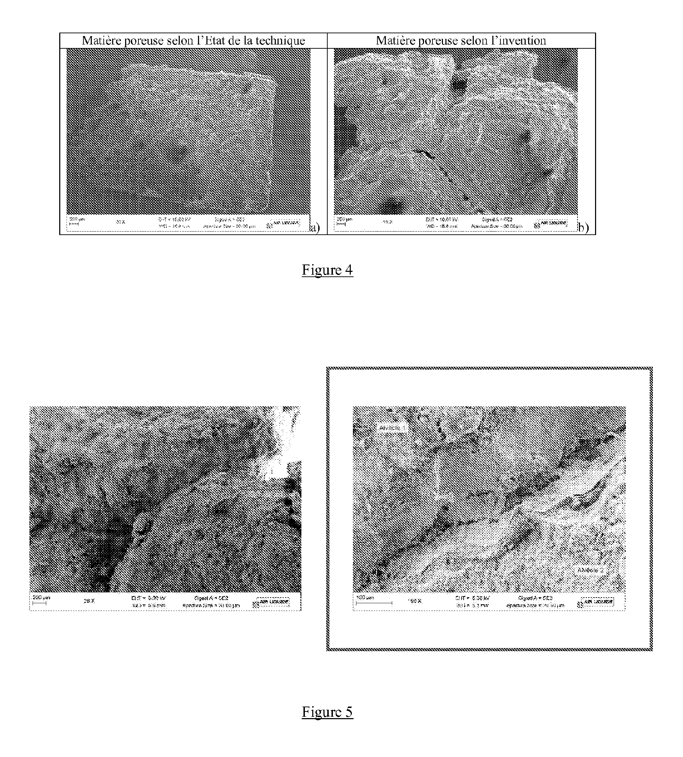

Les figures 4 et 5 comprennent chacune deux photographies montrant de manière plus précise les alvéoles et les canaux interconnectés. Les photographies ont été prises par microscopie électronique sur un FESEM Zeiss ultra 55.

La figure 4 comprend à gauche une photographie montrant la matière poreuse selon l'état de la technique, c'est-à-dire sans canaux millimétriques, et à droite une photographie montrant la matière poreuse selon l'invention, c'est-à-dire avec canaux millimétriques. Sur la photographie de droite, on observe trois alvéoles de matière poreuse qui se sont formées initialement autour de la structure polymère. C'est cette structure élémentaire qui compose le réseau de canaux millimétriques.

La figure 5 illustre l'interface entre deux alvéoles. La photographie de droite représente un agrandissement de la photographie de gauche. Le canal observé correspond à l'empreinte laissée par la matrice polymère après décomposition thermique. Ces empreintes forment le réseau de pores millimétriques dans le volume de la masse poreuse.

Dans certaines zones des alvéoles, il est possible d'observer des petits canaux (5-10 µm) formés par le dégazage issu de la décomposition thermique de la structure polymère lors de l'étape de séchage. Ces canaux participent à la perméabilité globale du matériau. La figure 6 illustre ces canaux de dégazage.

L'invention a également pour objet un récipient renfermant une matière poreuse telle que décrite précédemment, lequel récipient est apte à contenir et distribuer un fluide.

Le récipient comprend habituellement une enveloppe métallique renfermant la matière poreuse décrite précédemment. L'enveloppe métallique peut être constituée d'un matériau métallique tel que l'acier, par exemple un acier à carbone normalisé P265NB selon la norme NF EN10120, dont l'épaisseur le rend apte à résister au moins à la pression d'épreuve de 60 bar (6 MPa), valeur normative réglementaire pour le conditionnement de l'acétylène dans les conditions décrites précédemment. Le récipient est en outre habituellement de forme cylindrique et généralement pourvu de moyens de fermeture et d'un régulateur de pression. Ce récipient a de préférence un rapport diamètre / longueur compris entre 0,2 et 0,7, plus préférentiellement entre 0,35 et 0,5, et une capacité en eau minimale d'un litre. Habituellement, un tel récipient aura la forme d'une bouteille.

Les fluides stockés dans la structure de garnissage selon l'invention peuvent être des gaz ou des liquides.

Comme gaz, on peut citer les gaz comprimés purs ou en mélanges sous forme gazeuse ou liquide, tels que l'hydrogène, les hydrocarbures gazeux (alcanes, alcynes, alcènes), l'azote et l'acétylène, et les gaz dissous dans un solvant tels que l'acétylène et les mélanges acétylène-éthylène ou acétylène-éthylène-propylène dissous dans un solvant tel que l'acétone ou le diméthylformamide (DMF).

Si le récipient selon l'invention est isolé thermiquement au niveau de sa paroi extérieure, celui-ci est apte à contenir et distribuer un fluide cryogénique tel que : l'hydrogène, l'hélium, l'oxygène, l'azote ou tout autre gaz liquide

Comme liquides, on peut notamment citer les précurseurs organométalliques tels que les précurseurs de Ga et In, utilisés en particulier dans l'électronique, ainsi que la nitroglycérine. On peut citer également tous les alcools où mélanges d'alcool.

En particulier, le récipient selon l'invention contient de l'acétylène dissous dans du DMF ou de l'acétone.

Finalement, la matière poreuse céramique selon l'invention permet de diminuer les effets liés à la perte de charge (longue durée de remplissage, de restitution, de vidange). En effet, l'architecture (macrostructure) déployée permet au gaz et au solvant d'arriver plus rapidement au sein de la masse poreuse et de manière parfaitement homogène, tout en gardant la microstructure selon l'Etat de la technique.

A titre d'exemple, pour le cas des bouteilles d'acétylène dissous dans l'acétone ou le DMF, le débit est limité par la perte de charge important de la matière poreuse actuelle (sans micro canaux). Cela a pour conséquence :
- Lors du remplissage, d'augmenter le temps de remplissage : environ 6 heures en moyenne pour une bouteille
- Lors du vidage, de limiter le débit de gaz et la quantité de gaz restituable de la bouteille : pour une bouteille de 6 litres le débit est limité à 400 l/h pendant environ 40 minutes, et la quantité de gaz restituable est de environ 50% par tirage.

La matière poreuse céramique selon l'invention avec une macroporosité contrôlée permet de diminuer ces effets négatifs tout en maintenant un facteur sécurité satisfaisant.

## Revendications

1. Matière poreuse céramique comprenant :
- une microstructure comprenant un matériau de structure cristalline xonotlite et/ou tobermorite cristallisé sous la forme d'aiguilles liées les unes aux autres de façon à ménager entre elles un diamètre de pore D95 supérieur ou égal à 0,4 µm et inférieur à 5 µm et un diamètre moyen de pore D50 supérieur ou égal à 0,4 µm et inférieur à 1,5 µm préférentiellement de 0,4 à 1 µm; et
- une macrostructure continue constituée par des canaux interconnectés dans la microstructure.

2. Matière poreuse selon la revendication 1, **caractérisée en ce que** la taille des canaux interconnectés est comprise entre 10 µm à 2 mm de diamètre, préférentiellement entre 100 µm à 1 mm de diamètre.

3. Matière poreuse selon l'une des revendications 1 ou 2, **caractérisée en ce que** les canaux définissent des nodules ou alvéoles.

4. Matière poreuse selon l'une des revendications 1 à 3, **caractérisée en ce que** lesdites aiguilles ont une longueur allant de 2 à 10 µm, de préférence de 2 à 5 µm ; une largeur allant de 0,010 à 0,25 µm et une épaisseur inférieure à 0,25 µm.

5. Matière poreuse selon l'une des revendications 1 à 4, **caractérisée en ce que** ladite matière renferme au moins 70% en poids de phase cristalline, préférentiellement au moins 90% en poids de phase cristalline.

6. Procédé de fabrication d'une matière poreuse céramique selon l'une quelconque des revendications 1 à 4, **caractérisé en ce qu'**il comprend les étapes suivantes :
a) une étape de préparation d'un mélange pâteux à base d'oxyde de calcium, de silice et d'eau en excès,
b) une étape d'introduction, dans le mélange préparé à l'étape a), d'une matrice carbonée, monolithique, sous forme d'une structure alvéolaire et pouvant brûler à des températures de l'ordre de 150 - 600°C,
c) une étape de synthèse hydrothermale de la matière poreuse autour de la matrice de l'étape b), à partir du mélange issu de l'étape a) et comprenant la matrice de l'étape b),
d) une étape de séchage de la matière poreuse issue de l'étape c), et
e) une étape d'extraction de la matrice carbonée par combustion à une température inférieure à 600°C.

7. Procédé de fabrication selon la revendication 6, **caractérisé en ce que** les étapes d) et e) sont couplées.

8. Procédé selon l'une des revendications 6 ou 7, **caractérisé en ce que** la masse carbonée est polymérique.

9. Procédé selon l'une des revendications 6 à 8, **caractérisé en ce que** la matrice carbonée est une architecture alvéolaire à base d'un élément choisi parmi le PVC, le polystyrène, le polyuréthane, le polyéthylène, le polypropylène, la cellulose, le chanvre, l'amidon, le coton.

10. Récipient renfermant une matière poreuse telle que définie dans l'une quelconque des revendications 1 à 5, lequel récipient à la forme d'une bouteille apte à contenir et distribuer un fluide liquide ou gazeux.

11. Récipient selon la revendication 10, **caractérisé en ce que** ledit récipient est isolé thermiquement au niveau de sa paroi extérieure et est apte à contenir et distribuer un fluide cryogénique.

12. Récipient selon la revendication 10, **caractérisé en ce qu'**il contient de l'acétylène dissout dans un solvant, en particulier du DMF ou de l'acétone.

13. Utilisation d'un récipient selon la revendication 10 ou 12, ou d'une matière poreuse selon l'une des revendications 1 à 5 pour stocker de l'acétylène.

## Patentansprüche

1. Poröses keramisches Material, das Folgendes aufweist:
- eine Mikrostruktur, die ein Material mit Tobermorit- und/oder Xonotlitkristallstruktur in Form von Nadeln enthält, die so miteinander verbunden sind, dass sie zwischen sich einen Porendurchmesser D95 bilden, der größer oder gleich 0,4 µm und kleiner als 5 µm ist, und einen durchschnittlichen Porendurchmesser D50, der größer oder gleich 0,4 µm und kleiner als 1,5 µm, vorzugsweise 0,4 bis 1 µm, ist; und
- eine durchgängige Makrostruktur, die von Kanälen gebildet ist, die in der Mikrostruktur miteinander verbunden sind.

2. Poröses Material nach Anspruch 1, **dadurch gekennzeichnet, dass** die Größe der miteinander verbundenen Kanäle zwischen 10 µm bis 2 mm Durchmesser, vorzugsweise zwischen 100 µm bis 1 mm Durchmesser beträgt.

3. Poröses Material nach einem der Ansprüche 1 oder 2, **dadurch gekennzeichnet, dass** die Kanäle Knollen oder Waben bilden.

4. Poröses Material nach einem der Ansprüche 1 bis 3, **dadurch gekennzeichnet, dass** die Nadeln eine Länge von 2 bis 10 µm, bevorzugt von 2 bis 5 µm, eine Breite von 0,010 bis 0,25 µm und Dicke kleiner als 0,25 µm haben.

5. Poröses Material nach einem der Ansprüche 1 bis 4, **dadurch gekennzeichnet, dass** das Material mindestens 70 Gew.-% kristalliner Phase, vorzugsweise mindestens 90 Gew.-% kristalliner Phase, umschließt.

6. Verfahren zur Herstellung eines porösen keramischen Materials nach einem der Ansprüche 1 bis 4, **dadurch gekennzeichnet, dass** es die folgenden Schritte umfasst:
a) einen Schritt der Herstellung eines pastösen Gemischs auf der Basis von Calciumoxid, von Siliziumoxid und von Wasser im Überschuss,
b) einen Schritt der Einbringung einer monolithischen kohlenstoffhaltigen Matrix in Form einer wabenförmigen Struktur, die bei Temperaturen in der Größenordnung von 150 bis 160 °C brennbar ist, in das in Schritt a) hergestellte Gemisch,
c) einen Schritt der hydrothermalen Synthese des porösen Materials um die Matrix aus Schritt b) aus dem Gemisch, das aus Schritt a) hervorgegangen ist und die Matrix aus Schritt b) enthält,
d) einen Schritt der Trocknung des aus Schritt c) hervorgegangenen porösen Materials und
e) einen Schritt der Extraktion der kohlenstoffhaltigen Matrix durch Verbrennung bei einer Temperatur, die kleiner als 600 °C ist.

7. Herstellungsverfahren nach Anspruch 6, **dadurch gekennzeichnet, dass** die Schritte d) und e) gekoppelt werden.

8. Verfahren nach einem der Ansprüche 6 oder 7, **dadurch gekennzeichnet, dass** die kohlenstoffhaltige Masse polymer ist.

9. Verfahren nach einem der Ansprüche 6 bis 8, **dadurch gekennzeichnet, dass** die kohlenstoffhaltige Matrix eine wabenförmige Architektur auf Basis eines Elements ist, das ausgewählt ist aus PVC, Polystyrol, Polyurethan, Polyethylen, Polypropylen, Cellulose, Hanf, Stärke, Baumwolle.

10. Behälter, der ein poröses Material nach einem der Ansprüche 1 bis 5 umschließt, wobei der Behälter die Form einer Flasche hat, die ein flüssiges oder gasförmiges Fluid enthalten und ausgeben kann.

11. Behälter nach Anspruch 10, **dadurch gekennzeichnet, dass** der Behälter im Bereich seiner Außenwand wärmegedämmt ist und ein kryogenes Fluid enthalten und ausgeben kann.

12. Behälter nach Anspruch 10, **dadurch gekennzeichnet, dass** er Acetylen enthält, das in einem Lösungsmittel, insbesondere DMF oder Aceton, gelöst ist.

13. Verwendung eines Behälters nach Anspruch 10 oder 12 oder eines porösen Materials nach einem der Ansprüche 1 bis 5 zur Speicherung von Acetylen.

## Claims

1. Porous ceramic material comprising:
- a microstructure comprising a material having a crystalline xonotlite structure and/or a crystallised tobermorite structure in the form of needles which are interconnected such as to form therebetween a pore diameter D95 of greater than or equal to 0.4 µm and less than 5 µm and an average pore diameter D50 of greater than or equal to 0.4 µm and less than 1.5 µm, preferably of from 0.4 to 1 µm; and
- a continuous macrostructure formed by interconnected channels in the microstructure.

2. Porous material according to claim 1, **characterised in that** the size of the interconnected channels is between 10 µm and 2 mm in diameter, preferably between 100 µm and 1 mm in diameter.

3. Porous material according to either claim 1 or claim 2, **characterised in that** the channels define nodules or cells.

4. Porous material according to any of claims 1 to 3, **characterised in that** said needles have a length of from 2 to 10 µm, preferably of from 2 to 5 µm, a width of from 0.010 to 0.25 µm, and a thickness of less than 0.25 µm.

5. Porous material according to any of claims 1 to 4, **characterised in that** said material contains at least 70 wt.% crystalline phase, preferably at least 90 wt.% crystalline phase.

6. Method for producing a porous ceramic material according to any of claims 1 to 4, **characterised in that** it comprises the following steps:
a) a step of preparing a paste-like mixture based on calcium oxide, silica and excess water;
b) a step of introducing, into the mixture prepared in step a), a monolithic carbon-containing matrix in the form of a cellular structure which can burn at temperatures of approximately 150 - 600 °C,
c) a step of hydrothermally synthesising the porous material around the matrix of step b), from the mixture which resulted from step a) and comprises the matrix of step b),
d) a step of drying the porous material from step c), and
e) a step of extracting the carbon-containing matrix by means of combustion at a temperature of less than 600 °C.

7. Production method according to claim 6, **characterised in that** steps d) and e) are linked.

8. Method according to either claim 6 or claim 7, **characterised in that** the carbon-containing mass is polymeric.

9. Method according to any of claims 6 to 8, **characterised in that** the carbon-containing matrix is a cellular architecture based on an element selected from among PVC, polystyrene, polyurethane, polyethylene, polypropylene, cellulose, hemp, starch and cotton.

10. Container containing a porous material according to any of claims 1 to 5, which container is in the shape of a bottle capable of containing and dispensing a liquid or gaseous fluid.

11. Container according to claim 10, **characterised in that** said container is thermally insulated at the external wall thereof and is capable of containing and dispensing a cryogenic fluid.

12. Container according to claim 10, **characterised in that** it contains acetylene dissolved in a solvent, in particular either DMF or acetone.

13. Use of a container according to either claim 10 or claim 12, or of a porous material according to any of claims 1 to 5 for storing acetylene.
